# EUROPÄISCHE PATENTANMELDUNG

(11) **EP 1 508 770 A1**
(43) Veröffentlichungstag der Anmeldung: **23.02.2005**
(21) Anmeldenummer: 04019063.9
(22) Anmeldetag: 11.08.2004
(51) Int. Cl.: G01B 5/00

(54) **Führung für Messeinrichtungen**

(30) Priorität: 20.08.2003 DE 20312875 U
(71) Anmelder: MAHA Maschinenbau Haldenwang GmbH & Co. KG, 87490 Haldenwang (DE)
(72) Erfinder: Schmuckat, Michael, 87452 Altusried (DE)
(74) Vertreter: Beetz & Partner Patentanwälte

(57) **Zusammenfassung**

Die vorliegende Erfindung betrifft eine Führung für Messeinrichtungen, insbesondere eine Linearführung zum linearen Verfahren von Messeinrichtungen, beispielsweise Messroboter. Eine Linearführung zum linearen Verfahren einer Messeinrichtung (10) weist eine Führungsschiene (1) und eine auf der Führungsschiene (1) verfahrbare Laufeinheit (2), an der die Messeinrichtung (10) angebracht ist, auf. Die Führungsschiene (1) weist eine obere Lauffläche (3), eine erste seitliche Lauffläche (4a) und eine zweite seitliche Lauffläche (4b) auf, die an einer der ersten seitlichen Lauffläche (4a) gegenüberliegenden Seite der Führungsschiene (1) mit einem vertikalen Versatz in Bezug auf die erste seitliche Lauffläche (4a) angeordnet ist. Die Laufeinheit (2) weist eine Laufrolle (5), die auf der oberen Lauffläche (3) der Führungsschiene (1) abrollt, eine erste Gegenrolle (6a), die an der ersten seitlichen Lauffläche (4a) abrollt, und eine zweite Gegenrolle (6b) auf, die an der zweiten seitlichen Lauffläche (4b) abrollt.

## Beschreibung

Die vorliegende Erfindung betrifft eine Führung für Messeinrichtungen, insbesondere eine Linearführung zum linearen Verfahren von Messeinrichtungen, beispielsweise Messroboter.

In vielen technischen Bereichen ist es notwendig eine Messeinrichtung über eine größere Strecke und mit hoher Präzision linear zu verfahren. Hierfür ist es üblich eine Schiene entlang des zu vermessenden Objekts anzuordnen, auf der die Messeinrichtung verfahrbar gelagert ist. Beispielsweise wird zur Vermessung der Lenkgeometrie oder zur Achsvermessung eines Fahrzeugs ein Messroboter entlang einer Fahrschiene, auf der das zu vermessende Fahrzeug aufsteht, verschiebbar angebracht.

Bei einem bekannten System wird die Laufeinheit, die den Messroboter trägt, von einer entlang der Fahrschiene angebrachten Führungswelle und einem die Führungswelle teilweise umfassenden Linearkugellager auf der einen Seite geführt. In einem horizontalen Abstand zur Führungswelle sind an der Laufeinheit Rollen vorgesehen, die auf einer Lauffläche abrollen. Der Antrieb der Laufeinheit erfolgt über einen Motor mit Zahnrad, das in eine an der Fahrschiene angebrachte Zahnstange eingreift. Der Nachteil dieses Systems ist, dass die relativ breite Anordnung der Lagerung der Laufeinheit durch horizontal versetzte Führungswelle und Lauffläche für die Rollen den Zugang zu dem zu messenden Objekt beeinträchtigt. Weiterhin sind die, für die präzise Führung der Laufeinheit notwendige Führungswelle und die erforderlichen Linealkugellager teuer und arbeitsaufwendig bei der Montage. Die insbesondere bei einem großen Verfahrweg notwendige hochpräzise Führungswelle kann in der erforderlichen Länge nur unter großem Aufwand gefertigt werden.

Die Aufgabe der vorliegenden Erfindung ist es eine einfache aber trotzdem präzise Linearführung zum linearen Verfahren einer Messeinrichtung zu schaffen, die kostengünstig in beliebigen Längen hergestellt werden kann, und deren Bauform eine geringe Breite ermöglicht, so dass der Zugang zu dem Messobjekt nicht beeinträchtigt wird.

Diese Aufgabe wird durch die Linearführung nach dem unabhängigen Anspruch gelöst. Die abhängigen Ansprüche betreffen vorteilhafte Ausgestaltungen der Erfindung.

Die Linearführung zum linearen Verfahren einer Messeinrichtung gemäß der vorliegenden Erfindung weist eine Führungsschiene und eine auf der Führungsschiene verfahrbare Laufeinheit, an der die Messeinrichtung angebracht ist, auf. Die Führungsschiene besitzt eine obere Lauffläche, eine erste seitliche Lauffläche und eine zweite seitliche Lauffläche, die an einer der ersten seitlichen Lauffläche gegenüberliegenden Seite der Führungsschiene mit einem vertikalen Versatz in Bezug auf die erste seitliche Lauffläche angeordnet ist. Die Laufeinheit besitzt eine Laufrolle, die auf der oberen Lauffläche der Führungsschiene abrollt, eine erste Gegenrolle, die an der ersten seitlichen Lauffläche abrollt, und eine zweite Gegenrolle, die an der zweiten seitlichen Lauffläche abrollt. Durch die erfindungsgemäße Gestaltung der Führungsschiene und der Laufeinheit wird eine kompakte Linearführung zum Verfahren der Messeinrichtung geschaffen, bei der Gewichtskräfte über die Laufrolle auf die obere Lauffläche der Führungsschiene übertragen werden können. Auftretende Momente können über die beiden vertikal versetzten Gegenrollen auf die Führungsschiene übertragen werden. Im Gegensatz zur oben beschriebenen, bekannten Linearführung, bei der Momente durch ein horizontal versetztes Kräftepaar aufgenommen werden, weist die vorliegende Erfindung eine Ausgestaltung auf, in der auftretende Momente durch ein vertikal angeordnetes Kräftepaar aufgenommen werden. Diese Ausgestaltung erlaubt es, Führungsschiene und Laufeinheit überwiegend in vertikaler Erstreckung auszubilden, wodurch die Breite der Linearführung deutlich verringert werden kann. Durch das geringe Anbaumaß der Führungsschiene wird ein ungehindertes Herantreten an das zu vermessende Objekt ermöglicht. Weiterhin kann die Führungsschiene einstückig als ein relativ einfaches Profil ausgebildet sein, das mittels eines Strangpressverfahrens in nahezu beliebigen Längen günstig herstellbar ist.

Vorzugsweise ist die Messeinrichtung in Bezug auf die Laufrolle seitlich versetzt angeordnet. Durch die seitlich versetzte Anbringung der Messeinrichtung an der Laufeinheit liegt der Schwerpunkt der bewegten Teile (Messeinrichtung und Laufeinheit) nicht unmittelbar über der Laufrolle bzw. der Führungsschiene. Auf diese Weise entsteht ein Moment, das über die Gegenrollen auf die Führungsschiene wirkt. Um dieses Moment aufzunehmen, ist es vorteilhaft wenn die Gegenrolle auf der der Messeinrichtung zugewandten Seite der Führungsschiene unterhalb der Gegenrolle auf der der Messeinrichtung abgewandten Seite angeordnet ist. Durch die auf die Gegenrollen wirkenden Kräfte ergibt sich eine spielfreie Führung der Laufeinheit und der Messeinrichtung. Die Laufeinheit wird so in drei Richtungen geführt und kann in Längsrichtung der Führungsschiene bewegt werden.

Vorzugsweise ist die Führungsschiene als abgewinkeltes Profil ausgebildet. Die erste seitliche Lauffläche und die zweite seitliche Lauffläche können bezüglich einer Mittellinie der Laufrolle auf der gleichen Seite angeordnet sein. Durch diese Anordnung entsteht eine kompakte Bauform der Linearführung, bei der die Laufeinheit in einem ausgesparten Teil der Führungsschiene angeordnet sein kann, wodurch die Breite der Linearführung weiter verringert wird.

Besonders zweckmäßig ist es wenn die Führungsschiene einen ersten Abschnitt, an dem die obere Lauffläche und die erste seitliche Lauffläche angeordnet sind, und einen horizontal zum ersten Abschnitt versetzten zweiten Abschnitt, an dem die zweite seitliche Lauffläche angeordnet ist, aufweist. Durch diese Ausgestaltung des Profils der Führungsschiene entsteht eine kompakte Anordnung von Führungsschiene und Laufeinheit, die vorteilhafte Angriffspunkte der Kräfte und Momente aufweist. Vorzugsweise sind die beiden seitlichen Laufflächen parallel zueinander und bezüglich der Laufrolle auf der der Messeinrichtung abgewandten Seite angeordnet. Auf diese Weise entsteht eine vorteilhafte Kräfteverteilung, wobei ein Teil der Gewichtskraft von Laufeinheit und Messeinrichtung über die Laufrolle auf die obere Lauffläche der Führungsschiene wirkt.

Zur Stabilisierung der Laufeinheit können mehrere in Längsrichtung der Führungsschiene versetzte Laufrollen und/ oder mehrere in Längsrichtung der Führungsschiene versetzte Gegenrollen vorgesehen sein. Auf diese Weise wird ein Verdrehen bzw. Verkippen der Laufeinheit um eine vertikale Achse und/oder eine horizontale Achse quer zur Längsrichtung der Führungsschiene verhindert. Auch können durch das Vorsehen von mehreren Laufrollen und/oder Gegenrollen die Kräfte bzw. Flächendrücke auf die Rollen bzw. Laufflächen vermindert werden.

Um das Anliegen der Gegenrollen an ihren jeweiligen Laufflächen zu verbessern und ein Spiel zu verhindern, das beim Vorsehen von mehreren ersten und/oder mehreren zweiten Gegenrollen auftreten kann, ist es vorteilhaft eine in Längsrichtung der Führungsschiene angeordnete, um eine vertikale Achse drehbare Wippe an der Laufeinheit vorzusehen, wobei die Gegenrollen jeweils an einem anderen Arm der Wippe angebracht sind. Besonders vorteilhaft ist es die Wippe an einem Ausleger der Laufeinheit, an dem die unteren Gegenrollen befestigt sind, vorzusehen. In diesem Fall liegen die unteren Gegenrollen auch dann an der unteren Lauffläche an, wenn sie nicht vollständig symmetrisch und mit gleichem Abstand zur Führungsschiene montiert sind.

Die Wippe kann auch als Doppelwippe mit zwei drehbaren Endstücken an beiden Armen ausgebildet sein, wobei jeweils zwei Gegenrollen an den beiden Endstücken der Doppelwippe angebracht sind. In diesem Fall sind insgesamt vier erste und/oder zweite Gegenrollen zur Aufnahme der durch das Moment verursachten seitlichen Kraft vorgesehen.

Zweckmäßigerweise weist die Führungsschiene einen nach oben offenen U-förmigen Abschnitt auf, wobei die Laufrolle auf der Stirnseite eines der Schenkel des U-förmigen Abschnitts läuft. Die obere Gegenrolle kann auf einer an einer Seitenfläche des Schenkels angebrachten Lauffläche abrollen. Der durch das Profil der Führungsschiene gebildete U-förmige Abschnitt ist besonders geeignet die Kabelzuführung für die Messeinrichtung, z.B. in Form einer Kabelschleppe, aufzunehmen. Beim Verfahren der Messeinrichtung wird die Kabelschleppe in dem geschützten
U-förmigen Abschnitt abgelegt bzw. von dort entnommen. Auf diese Weise ist immer eine definierte Position der Leitungen gewährleistet, die so vor Beschädigung geschützt sind.

Weiterhin ist es möglich das Profil der Führungsschiene derart auszubilden, dass diese zusätzliche mechanische Funktionen erfüllen kann. Beispielsweise kann ein weiterer U-förmiger Bereich vorgesehen sein, der als Führung für weitere Bauelemente einer Hebebühne dienen kann. Bei einem Prüfstand zur Vermessung der Lenk- und/oder Achsgeometrie können Radplatten auf der Fahrschiene vorgesehen sein, deren Längsführung mittels einer in dem zusätzlichen U-förmigen Abschnitt der Führungsschiene abrollenden Seitenrollen erfolgt.

Zum Antreiben der Laufrolle ist zweckmäßigerweise ein Antrieb, beispielsweise ein Elektromotor, vorgesehen. Um die Reibung für den Friktionsantrieb der Laufeinheit zu erhöhen, ist vorzugsweise ein Friktionsbelag für die obere Lauffläche vorgesehen. Dieser kann in einer Nut in der Stirnfläche der Führungsschiene eingelassen sein. Bei dem Friktionsbelag handelt es sich um einen rauen Belag, vorzugsweise aus Kunststoff, der beispielsweise aufgeklebt wird.

Zur Befestigung der Führungsschiene kann zumindest eine im Wesentlichen flache Seitenfläche der Führungsschiene vorgesehen sein. Auf diese Weise kann die Führungsschiene einfach entlang einer Fahrschiene einer Fahrzeugbühne befestigt werden. Die zur Befestigung vorgesehene Seitenfläche kann auch eine Abstufung zum horizontalen und/oder vertikalen Ausrichten der Führungsschiene aufweisen. Zur Befestigung der Führungsschiene sind beispielsweise FeststellSchrauben vorgesehen. Die horizontale und/oder vertikale Justierung kann über Maden-Schrauben erfolgen, die den Abstand des zurückgesetzten Teils der Befestigungsfläche zur Fahrschiene einstellen.

Die Messeinrichtung kann zumindest einen vorzugsweise senkrecht zur Längsrichtung der Führungsschiene angeordneten, beweglichen Arm aufweisen. Die Lagerung des beweglichen Arms der Messeinrichtung kann am vom Messobjekt abgewandten Ende des Messarms erfolgen, wodurch die Messeinrichtung eine seitlich weit vom Messobjekt bzw. der Führungsschiene ausladende Form erhält. Da die Messeinrichtung in diesem Fall über die Führungsschiene seitlich hinaus steht und ihr Schwerpunkt auch seitlich versetzt ist, entsteht ein Moment, das von den Gegenrollen aufgenommen und auf die Führungsschiene übertragen wird. Dieses Moment wird gemäß der vorliegenden Erfindung dazu benutzt, eine spielfreie Lagerung der Laufeinheit und der Messeinrichtung zu bewirken.

Vorzugsweise ist die Messeinrichtung als Messroboter zur Vermessung der Fahrwerksgeometrie eines Fahrzeugs ausgebildet. Die Führungsschiene ist entlang einer Fahrschiene für das Fahrzeug angebracht und erlaubt ein lineares, spielfreies Verfahren des Messroboters in Fahrzeuglängsrichtung. Durch die geringe Breite der Führungsschiene kann an das Fahrzeug problemlos herangetreten und gearbeitet werden. Die Führungsschiene besteht nur aus einem einzigen Teil, das günstig in verschiedenen Längen und für größere Längen gefertigt werden kann.

Die Erfindung beschränkt sich nicht auf das im Folgenden erläuterte Ausführungsbeispiel, sondern erfasst auch weitere Kombinationen, die ein Fachmann der Anmeldung entnehmen kann. Es zeigen:
Fig. 1 schematisch ein Ausführungsbeispiel der erfindungsgemäßen Linearführung;
Fig. 2 eine perspektivische Darstellung einer erfindungsgemäßen Führungsschiene;
Fig. 3 eine schematische Darstellung einer erfindungsgemäßen Linearführung zum Verfahren eines Messroboters entlang einer Fahrschiene;
Fig. 4 eine schematische Detailansicht eines Ausführungsbeispiels der erfindungsgemäßen Linearführung; und
Fig. 5 eine weitere schematische Darstellung einer erfindungsgemäßen Linearführung.

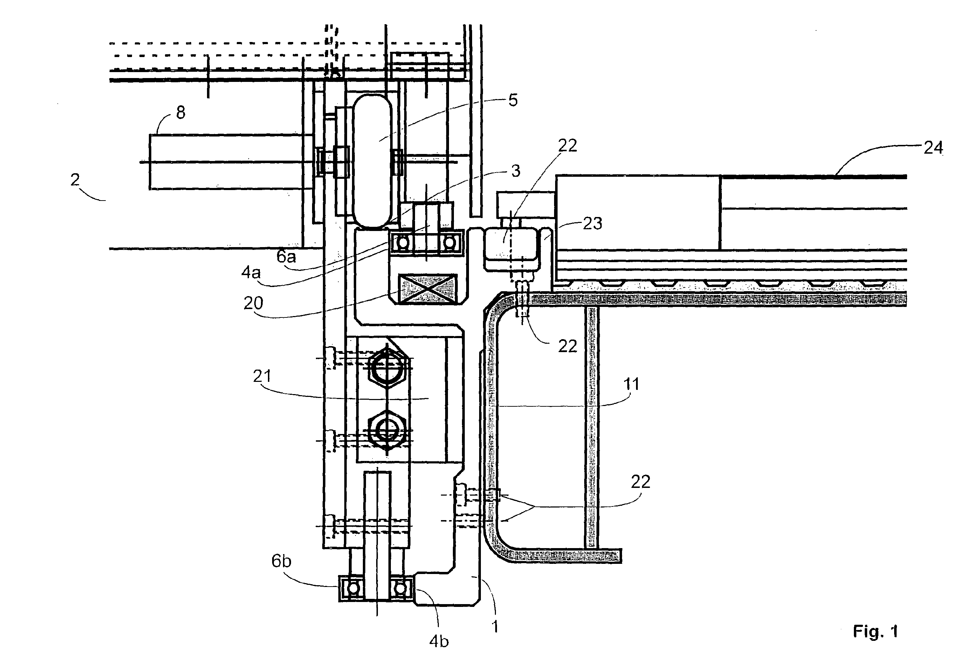

Fig. 1 zeigt schematisch ein Ausführungsbeispiel der erfindungsgemäßen Linearführung zum Verfahren einer Messeinrichtung. Eine als abgewinkeltes Profil ausgebildete Führungsschiene 1 mit einer oberen Lauffläche 3, einer ersten seitlichen Lauffläche 4a und einer zweiten seitlichen Lauffläche 4b ist an einer Fahrschiene 11 befestigt. Die Laufeinheit 2 weist eine auf der oberen Lauffläche 3 abrollende Laufrolle 5, eine erste Gegenrolle 6a, die an der ersten seitlichen Lauffläche 4a abrollt, und eine zweite Gegenrolle 6b auf, die an der zweiten seitlichen Lauffläche 4b abrollt. Die Gegenrollen 6a, 6b sind vertikal versetzt zueinander an der Laufeinheit 2 angebracht, um das Moment, welches durch die seitlich versetzte Messeinrichtung (nicht gezeigt) entsteht, aufzunehmen. Wie bereits erläutert ist auf diese Weise eine spielfreie Führung der Laufeinheit 2 möglich.

In dem gezeigten Ausführungsbeispiel ist die Führungsschiene 1 als doppelt abgewinkeltes Profil ausgebildet, wobei die erste und zweite seitliche Lauffläche 4a, 4b der Führungsschiene 1 auf der gleichen Seite bezüglich einer Mittellinie der Laufrolle 5 angeordnet sind. Die Ansatzpunkte der horizontalen Kräfte an der Führungsschiene 1 (erste und zweite seitliche Lauffläche 4a, 4b) liegen bei dem gezeigten Profil auf einer Seite (rechts) von der Laufrolle 5. Weiterhin ist durch das abgewinkelte Profil der Führungsschiene 1 eine besonders kompakte Bauweise der Linearführung möglich, die ein geringes Anbaumaß erlaubt, so dass das auf der Fahrschiene 11 stehende, zu vermessende Objekt leicht erreicht und daran gearbeitet werden kann.

Der Antrieb der Laufeinheit 2 erfolgt über einen Motor 8, der die Laufrolle 5 zum linearen Verfahren der Laufeinheit 2 antreibt. Die elektrischen Verbindungen zur Messeinrichtung 10 und zum Antrieb 8 werden über ein hoch flexibles Flachkabel geführt. Im beweglichen Teil wird das Flachkabel in einer Kabelschleppe 20 geführt, die in dem nach oben of fenen U-förmigen Abschnitt 7 der Führungsschiene 1 abgelegt wird. Das Kabel ist auf diese Weise gut mechanisch vor Beschädigungen geschützt.

An den Enden der Führungsschiene 1 sind Anschläge 21 vorgesehen. Die Befestigung der Führungsschiene 1 an der Fahrschiene 11 erfolgt über Schrauben 22. Zum horizontalen und/oder vertikalen Ausrichten der Führungsschiene 1 ist an der zur Befestigung der Führungsschiene 1 vorgesehenen Seitenfläche eine Abstufung 12 vorgesehen. Mittels einer Feststell-Schraube und einer Maden-Schraube 22 lässt sich die Führungsschiene 1 leicht ausrichten. Dies ist insbesondere dann von Vorteil, wenn es im Produktionsablauf nicht möglich ist die Seitenwange der Fahrzeugschiene 11 genau im Rechten Winkel gegenüber der Fahrbahn abzukanten. Eventuell auftretende Ungenauigkeiten der Fahrschiene 11 können so einfach ausgeglichen werden.

In dem in Fig. 1 gezeigten Ausführungsbeispiel ist auf der Fahrschiene 11 eine verschiebbare Radplatte 24 vorgesehen. Solche Radplatten 24 sind beispielsweise zum Vermessen der Achs- und Lenkgeometrie von Fahrzeugen vorgesehen. Die verschiebbare Radplatte 24 wird in Längsrichtung der Fahrschiene 11 von Seitenrollen 22 geführt, die in einem nach oben offenen U-förmigen Abschnitt der Führungsschiene 1 laufen. Dieser weitere U-förmige Abschnitt der Führungsschiene 1 wird durch einen Kamm 23 gebildet.

Um die Radplatten auf unterschiedliche Radstände von Fahrzeugen einzustellen, können die Radplatten 24 in der Längsrichtung der Fahrschiene 11 verschoben werden. Der hochgezogene Kamm 23 an der Seite der Führungsschiene 1 vereinfacht die Führung der Radplatten 24, da dieser einseitig über die Führungsrollen 22 in der entstehenden Führung geführt werden kann. Dies ermöglicht es, dass die Innenseiten der Fahrschienen 11 frei von zusätzlichen Teilen zum Führen der Radplatten 24 bleiben. Auf diese Weise kann sich in der Mitte der Fahrbahn ein Wagen-Freiheber auf der gesamten Fahrbahnlänge bewegen.

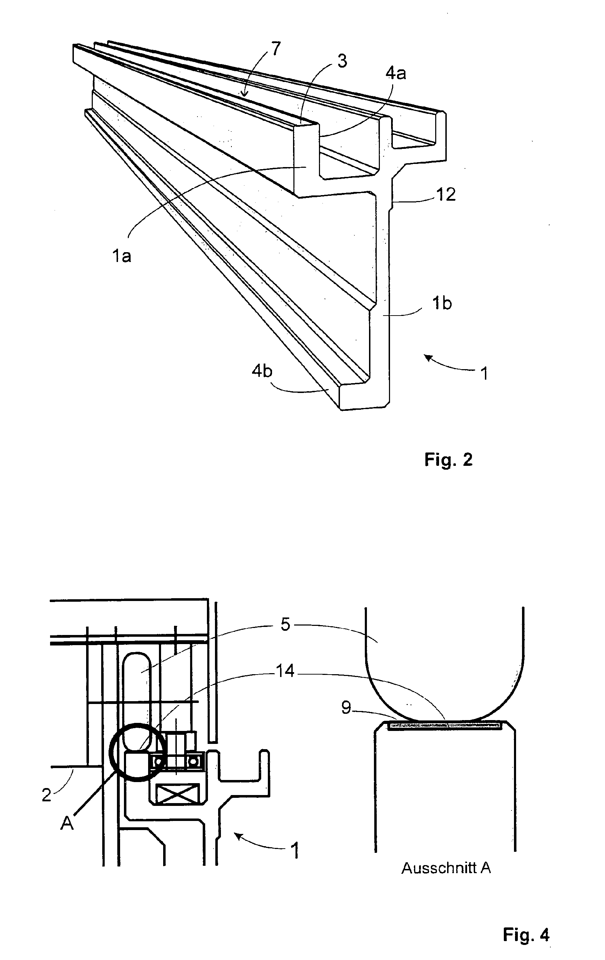

Die Fig. 2 zeigt perspektivisch einen Abschnitt einer Führungsschiene 1 gemäß der vorliegenden Erfindung.

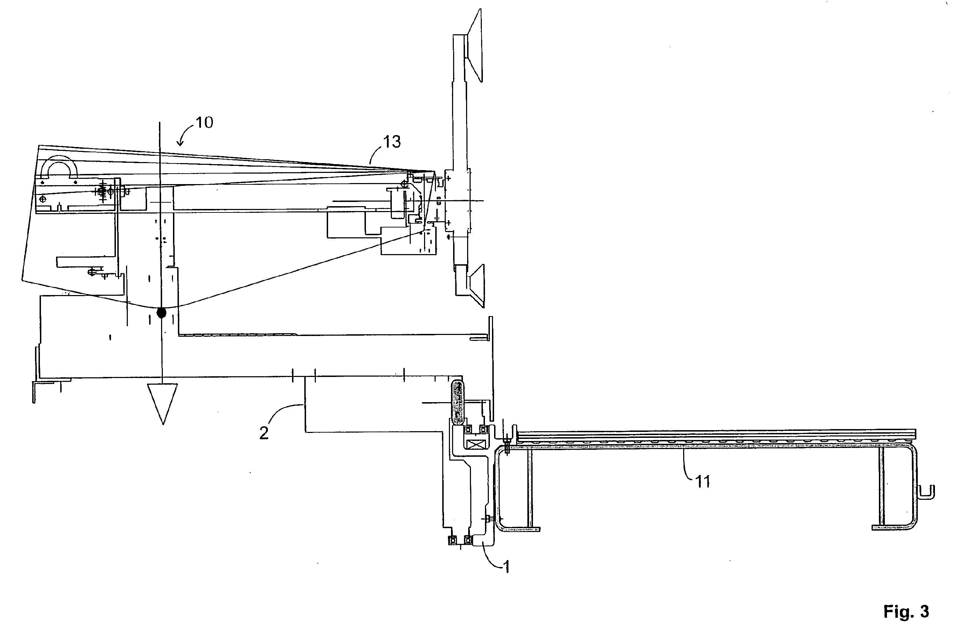

Die Fig. 3 zeigt schematisch ein Ausführungsbeispiel der vorliegenden Erfindung, bei dem die Messeinrichtung 10 als Messroboter zur Vermessung der Fahrwerksgeometrie eines auf der Fahrschiene 11 aufstehenden Fahrzeugs ausgebildet ist. Zur Vermessung des Fahrzeugs muss der an der Laufeinheit 2 befestigte Messroboter 10 entlang der Fahrschiene 11 verfahren werden. Weiterhin ist ein quer zur Längsrichtung der Führungsschiene 1 angeordneter, beweglicher Arm 13 vorgesehen. Um eine ausreichende Beweglichkeit zu erzielen, ist der Arm 13 relativ lang ausgebildet, wodurch der Schwerpunkt des Messroboters 10 seitlich versetzt von der Führungsschiene 1 liegt. Dies führt zu einem Moment, welches von der Führungsschiene 1 aufgenommen werden muss.

Durch die Belastung der Laufeinheit 2 mit dem Gewicht des Messroboters 10 (ca. 40 kg) wirken mehrere Kräfte auf die Führungsschiene 1. Ein Teil der Kraft des Eigengewichts wirkt auf die obere Laufrolle 3 und erzeugt die für den Friktionsantrieb notwendige Reibung zwischen Laufrolle 5 und oberer Lauffläche 3. Ein Vielfaches des Robotergewichts wirkt aufgrund des Hebelgesetztes als seitlicher Druck auf die Führungsschiene 1. Dadurch wird erreicht, dass kein Spiel in der Führung auftritt. Dieselbe Kraft wirkt sowohl auf die obere Lauffläche 4a als auch als Gegenkraft auf die untere Lauffläche 4b.

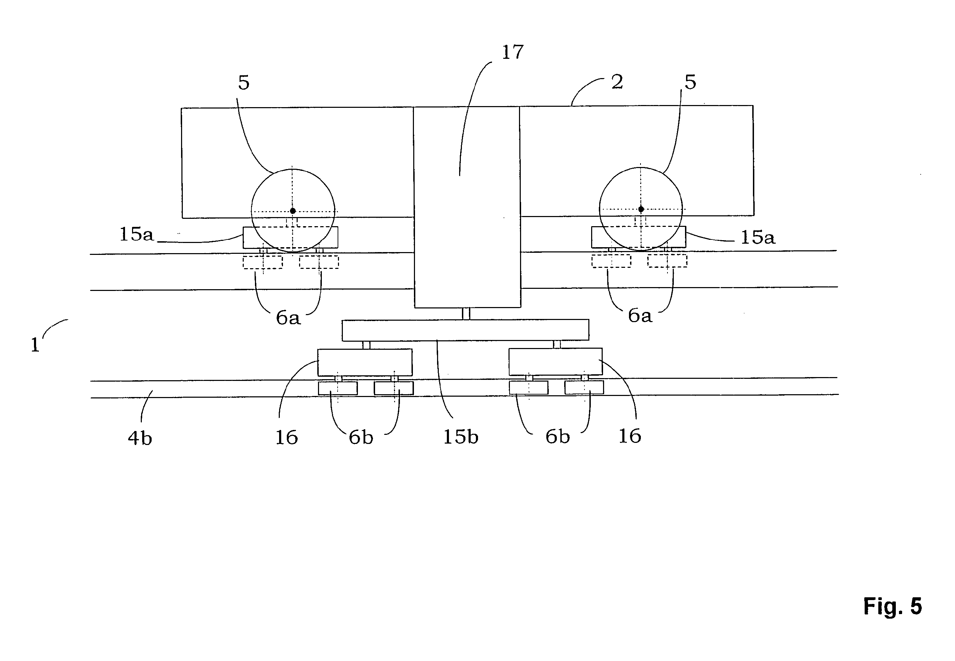

Die Fig. 4 zeigt schematisch eine Detailansicht der Linearführung und einen vergrößerten Ausschnitt A. Zur Erhöhung der Reibung des Friktionsantriebs ist die obere Lauffläche 3 mit einem Friktionsbelag 9 versehen. Der Friktionsbelag 9 ist in dem gezeigten Ausführungsbeispiel in einer Nut 14 in der Stirnfläche der Führungsschiene 1 eingelassen.

Gegenüber einem Antrieb der Laufeinheit 2 mittels Zahnstangen weist ein Friktionsantrieb große Vorteile auf. Da keine Zahnstangen auf einer Länge von mehreren Metern montiert werden müssen, können hohe Material- und Arbeitskosten für das Ablängen und Ausrichten der Zahnstangen eingespart werden. Als Friktionsbelag 9 ist beispielsweise ein üblicher, rauer Belag aus Kunststoff geeignet. Dieser kann in die Führungsschiene 1 eingelassene Nut 14 eingeklebt werden.

Die Fig. 5 zeigt schematisch eine Seitenansicht eines Ausführungsbeispiels der Erfindung, bei dem die Laufeinheit 2 eine in Längsrichtung der Führungsschiene 1 angeordnete, um eine vertikale Achse drehbare Wippe 15b aufweist. Die gezeigte Wippe 15b ist an einem Ausleger 17 der Laufeinheit 2 angebracht und als Doppelwippe mit drehbaren Endstücken 16 an den beiden Armen der Wippe 15b ausgebildet. Jeweils zwei Gegenrollen 6b sind an den beiden Endstücken 16 der Doppelwippe angebracht, um das durch die Messeinrichtung erzeugte Moment aufzunehmen. Auf diese Weise wird das Anliegen der Gegenrollen 6b an der Lauffläche 4b verbessert. Die Gegenrollen 6b liegen so auch dann an der unteren Lauffläche 4b an, wenn sie nicht vollständig symmetrisch und mit gleichem Abstand zur Führungsschiene 1 montiert sind.

In dem gezeigten Ausführungsbeispiel sind auch die oberen Gegenrollen 6a jeweils an einem Arm einer Wippe 15a angebracht. Zur Verbesserung der Stabilisierung der Laufeinheit 2 sind zwei in Längsrichtung der Führungsschiene 1 versetzte Wippen 15a mit jeweils zwei Gegenrollen 6a vorgesehen, die an der oberen Lauffläche 4a abrollen.

Die vorliegende Erfindung erlaubt eine spielfreie Führung einer Messeinrichtung 10, die nur eine geringe Breite aufweist, so dass an das zu vermessende Objekt problemlos herangetreten und gearbeitet werden kann. Da die Führungsschiene 1 nur aus einem einzigen Teil besteht, ist die Herstellung und Montage der Linearführung besonders kostengünstig. Weiterhin können durch eine entsprechende Ausgestaltung des Profils der Führungsschiene 1 weitere Funktionen ohne Mehraufwand realisiert werden. So ist durch das Vorsehen einer Abstufung 12 eine einfache Ausrichtung der Messanordnung möglich. Ein Kanal zur Führung einer Kabelschleppe 20 kann einfach in das Profil der Führungsschiene 1 integriert werden. Weiterhin kann die Führungsschiene 1 durch das Vorsehen eines zusätzlichen Kamms 23 eine zusätzliche Führung für andere bewegliche Bauteile bilden.

## Patentansprüche

1. Linearführung zum linearen Verfahren einer Messeinrichtung (10), mit
einer Führungsschiene (1) und
einer auf der Führungsschiene (1) verfahrbaren Laufeinheit (2) an der die Messeinrichtung (10) angebracht ist, wobei
die Führungsschiene (1) eine obere Lauffläche (3), eine erste seitliche Lauffläche (4a) und eine zweite seitliche Lauffläche (4b) aufweist, die an einer der ersten seitlichen Lauffläche (4a) gegenüberliegenden Seite der Führungsschiene (1) mit einem vertikalen Versatz in Bezug auf die erste seitliche Lauffläche (4a) angeordnet ist, und
die Laufeinheit (2) eine Laufrolle (5), die auf der oberen Lauffläche (3) der Führungsschiene (1) abrollt, eine erste Gegenrolle (6a), die an der ersten seitlichen Lauffläche (4a) abrollt, und eine zweite Gegenrolle (6b) aufweist, die an der zweiten seitlichen Lauffläche (4b) abrollt.

2. Linearführung nach Anspruch 1, wobei die Messeinrichtung (10) in Bezug auf die Laufrolle (5) seitlich versetzt angeordnet ist, und die Gegenrolle (6b) auf der der Messeinrichtung (10) zugewandten Seite der Führungsschiene (1) unterhalb der Gegenrolle (6a) auf der der Messeinrichtung (10) abgewandten Seite angeordnet ist.

3. Linearführung nach Anspruch 1 oder 2, wobei die Führungsschiene (1) als abgewinkeltes Profil ausgebildet ist und die erste seitliche Lauffläche (4a) und die zweite seitliche Lauffläche (4b) auf der gleichen Seite bezüglich einer Mittellinie der Laufrolle (5) angeordnet sind.

4. Linearführung nach zumindest einem der Ansprüche 1 bis 3, wobei die Führungsschiene (1) einen ersten Abschnitt (1a), an dem die obere Lauffläche (3) und die erste seitliche Lauffläche (4a) angeordnet sind, und einen horizontal zum ersten Abschnitt (1a) versetzten zweiten Abschnitt (1b) aufweist, an dem die zweite seitliche Lauffläche (4b) angeordnet ist.

5. Linearführung nach zumindest einem der Ansprüche 1 bis 4, wobei die Laufeinheit (2) mehrere in Längsrichtung der Führungsschiene (1) versetzte Laufrollen (5) und/ oder mehrere in Längsrichtung der Führungsschiene (1) versetzte erste Gegenrollen (6a) und/oder mehrere in Längsrichtung der Führungsschiene (1) versetzte zweite Gegenrollen (6b) aufweist.

6. Linearführung nach Anspruch 5, wobei die Laufeinheit (2) eine in Längsrichtung der Führungsschiene (1) angeordnete, um eine vertikale Achse drehbare Wippe (15a, b) aufweist und die ersten oder zweiten Gegenrollen (6a, b) jeweils an einem anderen Arm der Wippe (15a, b) angebracht sind.

7. Linearführung nach Anspruch 6, wobei die Wippe (15a, b) als Doppelwippe mit drehbaren Endstücken (16) an beiden Armen ausgebildet ist und jeweils zwei Gegenrollen (6a, b) an den beiden Endstücken (16) der Doppelwippe angebracht sind.

8. Linearführung nach zumindest einem der Ansprüche 1 bis 7, wobei die Führungsschiene (1) einen nach oben offenen U-förmigen Abschnitt (7) aufweist und die Laufrolle (5) auf der Stirnseite eines der Schenkel des U-förmigen Abschnitts (7) läuft.

9. Linearführung nach zumindest einem der Ansprüche 1 bis 8, wobei ein Antrieb (8) zum Antreiben der Laufrolle (5) vorgesehen ist, und die obere Lauffläche (3) einen Friktionsbelag (9) aufweist, insbesondere einen in einer Nut (14) in der Führungsschiene (1) eingelassen Friktionsbelag (9).

10. Linearführung nach zumindest einem der Ansprüche 1 bis 9, wobei zumindest eine Seitenfläche der Führungsschiene (1) zur Befestigung, insbesondere entlang einer Fahrschiene (11) einer Fahrzeugbühne, vorgesehen ist.

11. Linearführung nach Anspruch 10, wobei die zur Befestigung vorgesehene Seitenfläche der Führungsschiene (1) eine Abstufung (12) zum horizontalen und/oder vertikalen Ausrichten der Führungsschiene (1) aufweist.

12. Linearführung nach zumindest einem der Ansprüche 1 bis 11, wobei die Messeinrichtung (10) zumindest einen beweglichen Arm (13) aufweist.

13. Linearführung nach zumindest einem der Ansprüche 1 bis 12, wobei die Messeinrichtung (10) als Messroboter zur Vermessung der Fahrwerksgeometrie eines Fahrzeugs ausgebildet ist.
